# EUROPÄISCHE PATENTSCHRIFT

(11) **EP 2 900 513 B1**
(45) Veröffentlichungstag und Bekanntmachung des Hinweises auf die Patenterteilung: **08.03.2017**
(21) Anmeldenummer: 13753630.6
(22) Anmeldetag: 28.08.2013
(51) Int. Cl.: B60K 23/02, B60K 26/02, G05G 1/30, G05G 5/03

(54) **KUPPLUNGSPEDALEINRICHTUNG**
CLUTCH PEDAL DEVICE
DISPOSITIF DE PÉDALE D'EMBRAYAGE

(30) Priorität: 27.09.2012 DE 102012217541
(43) Veröffentlichungstag der Anmeldung: 05.08.2015
(73) Patentinhaber: Robert Bosch GmbH, 70442 Stuttgart (DE)
(72) Erfinder: HLAVKA, Milos, 37312 Borovany (CZ)
(86) Internationale Anmeldenummer: PCT/EP2013/067772
(87) Internationale Veröffentlichungsnummer: WO 2014/048661

(56) Entgegenhaltungen:
- EP-A2- 1 956 462
- EP-A2- 2 023 228
- US-A1- 2002 104 733
- US-A1- 2009 000 418

## Beschreibung

### Stand der Technik

Die Erfindung geht aus von einer Kupplungspedaleinrichtung nach der Gattung des Hauptanspruchs.

Es ist schon eine Kupplungspedaleinrichtung aus der DE 102 32 212 A1 bekannt, mit einem drehbar gelagerten Kupplungspedal und Mitteln zur Erzeugung eines vorbestimmten Verlaufs der Pedalkraft über dem Pedalweg, die einen drehfest mit dem Kupplungspedal verbundenen Pedalarm umfassen, der entgegen einer Federkraft einer Schraubenfeder bewegbar ist. Nachteilig ist, dass mit dieser Ausführung nur ein linear ansteigender Verlauf der Pedalkraft über dem Pedalweg erreichbar ist. Dadurch ergibt sich ein Pedalgefühl, das vom Pedalgefühl bei einem herkömmlichen Kupplungspedal, das die Kupplung hydraulisch betätigt, stark abweicht.

US 2002/104733 A1 offenbart eine Kupplungspedaleinrichtung für eine Kupplung eines Kraftfahrzeugs mit einem drehbar gelagerten Kupplungspedal und Mitteln zur Erzeugung eines vorbestimmten Verlaufs der Pedalkraft über dem Pedalweg, die einen drehfest mit dem Kupplungspedal verbundenen Pedalarm umfassen, der entgegen einer Federkraft bewegbar ist, wobei der Pedalarm auf einen von einer Gegenkraft beaufschlagten, drehbar gelagerten Hebelarm wirkt und bei Betätigung des Kupplungspedals auf einer Kontur des Hebelarms bewegt wird.

### Vorteile der Erfindung

Die erfindungsgemäße Kupplungspedaleinrichtung mit den kennzeichnenden Merkmalen des Hauptanspruchs hat demgegenüber den Vorteil, dass der Verlauf der Pedalkraft über dem Pedalweg nach einem Abschnitt mit positiver Steigung auch einen Abschnitt mit negativer Steigung aufweist. Dadurch ergibt sich ein Pedalgefühl, das dem Pedalgefühl beim Betätigen eines herkömmlichen Kupplungspedals, das die Kupplung hydraulisch betätigt, stark ähnelt. Außerdem lässt sich am Übergang von einem Abschnitt zum nächsten Abschnitt der sogenannte Schleifpunkt der Kupplung erfühlen. Diese Vorteile werden erfindungsgemäß erreicht, indem der Pedalarm auf einen von einer Gegenkraft beaufschlagten, drehbar gelagerten Hebelarm wirkt und bei Betätigung des Kupplungspedals auf einer Kontur des Hebelarms bewegt wird.

Durch die in den Unteransprüchen aufgeführten Maßnahmen sind vorteilhafte Weiterbildungen und Verbesserungen der im Hauptanspruch angegebenen Kupplungspedaleinrichtung möglich.

Vorteilhaft ist, wenn die Gegenkraft von einer auf den Hebelarm wirkenden Hebelfeder oder einem Aktuator erzeugt wird. Die Gegenkraft mittels der Hebelfeder zu erzeugen, ist besonders kostengünstig, wohingegen der Aktuator den Vorteil bietet, dass die auf den Hebelarm wirkende Gegenkraft sehr variabel und unabhängig von der Kontur des Hebelarms einstellbar ist. Auch der Übergang im Verlauf der Pedalkraft von dem Abschnitt mit positiver Steigung zum Abschnitt mit negativer Steigung lässt sich variabel und unabhängig von der Kontur des Hebelarms einstellen.

Gemäß einer vorteilhaften Ausführung wird der Hebelarm von der Hebelfeder gegen den Pedalarm gedrückt oder gezogen. Auf diese Weise setzt der Hebelarm der Bewegung des Pedalarms bzw. des Kupplungspedals einen Widerstand entgegen, der abhängig von der Kontur des Hebelarms und der Kupplungsposition ist.

Besonders vorteilhaft ist, wenn der Pedalarm an seinem dem Hebelarm zugewandten Ende ein auf der Kontur des Hebelarms abrollendes Abrollelement oder ein auf der Kontur des Hebelarms gleitendes Gleitelement aufweist, da auf diese Weise eine reibungsarme Bewegung mit wenig Laufgeräuschen erreichbar ist. Gemäß einem Ausführungsbeispiel ist das Abrollelement zylinderförmig, rollenförmig, kugelförmig oder kegelförmig ausgebildet.

Weiterhin vorteilhaft ist, wenn die Kontur des Hebelarms derart ausgebildet ist, dass die Pedalkraft in einem ersten Abschnitt mit zunehmendem Pedalweg zunimmt und in einem nachfolgenden zweiten Abschnitt mit weiter zunehmendem Pedalweg wieder abfällt, wobei der Verlauf der Pedalkraft über dem Pedalweg zwischen dem ersten und dem zweiten Abschnitt ein Maximum aufweist. Das Maximum dient dazu, für den Fahrer des Kraftfahrzeugs den sogenannten Schleifpunkt der Kupplung spürbar zu machen.

Gemäß dem Ausführungsbeispiel ist zwischen der Kontur des ersten Abschnitts und der Kontur des zweiten Abschnitts des Hebelarms ein Winkel im Bereich zwischen 120 und 180 Grad eingeschlossen.

Sehr vorteilhaft ist es, wenn die Kontur des Hebelarms zwischen dem ersten Abschnitt und dem zweiten Abschnitt abgerundet, flach bzw. plateauförmig ausgeführt ist, da auf diese Weise ein abrupter Anstieg oder Abfall der Pedalkraft um den Schleifpunkt herum vermieden wird. Dadurch ist das Kupplungspedal am Schleifpunkt komfortabler bedienbar und es stellt sich ein besseres Pedalgefühl um den Schleifpunkt herum ein.

Auch vorteilhaft ist, wenn Reibmittel vorgesehen sind, die eine Hysterese im Verlauf der Pedalkraft über dem Pedalweg erzeugen, da auf diese Weise die Pedalkraft beim Halten oder Entlasten des Kupplungspedals geringer ist als beim Betätigen des Kupplungspedals. Dadurch wird das Halten des Kupplungspedals bei schleifender Kupplung erleichtert.

Desweiteren vorteilhaft ist, wenn ein Positionssensor vorgesehen ist, der die Position, insbesondere den Drehwinkel des Kupplungspedals erfasst, da mit den Signalen des Positionssensors eine im Antriebsstrang des Fahrzeugs vorgesehene Kupplung gesteuert werden kann, beispielsweise elektronisch, hydraulisch oder elektrohydraulisch. Beispielsweise wird das Signal des Positionssensors als Eingangsgröße an eine Steuerung geleitet, die mit einem Ausgangssignal einen Aktuator ansteuert, der die im Antriebsstrang des Fahrzeugs vorgesehene Kupplung öffnet oder schließt. Die Steuerung kann dabei korrigierend eingreifen und beispielsweise ein sogenanntes Abwürgen des Motors durch ein zu schnelles Betätigen des Kupplungspedals verhindern.

Darüber hinaus vorteilhaft ist, wenn zumindest eine Rückstellfeder vorgesehen ist, die rückstellend auf das Kupplungspedal wirkt. Auf diese Weise ist sichergestellt, dass das Kupplungspedal bei Nicht-Betätigung immer in seine Neutralposition gelangt.

### Zeichnung

Zwei Ausführungsbeispiele der Erfindung sind in der Zeichnung vereinfacht dargestellt und in der nachfolgenden Beschreibung näher erläutert.
- Fig.1: zeigt eine Schnittansicht der erfindungsgemäßen Kupplungspedaleinrichtung gemäß einem ersten Ausführungsbeispiel,
- Fig.2: eine Schnittansicht der erfindungsgemäßen Kupplungspedaleinrichtung gemäß einem zweiten Ausführungsbeispiel,
- Fig.3: eine Ansicht des Hebelarms gemäß der Ausführung nach Fig.1 und Fig.2 und
- Fig.4: einen Verlauf der Pedalkraft über den Pedalweg für die erfindungsgemäße Kupplungspedaleinrichtung.

### Beschreibung der Ausführungsbeispiele

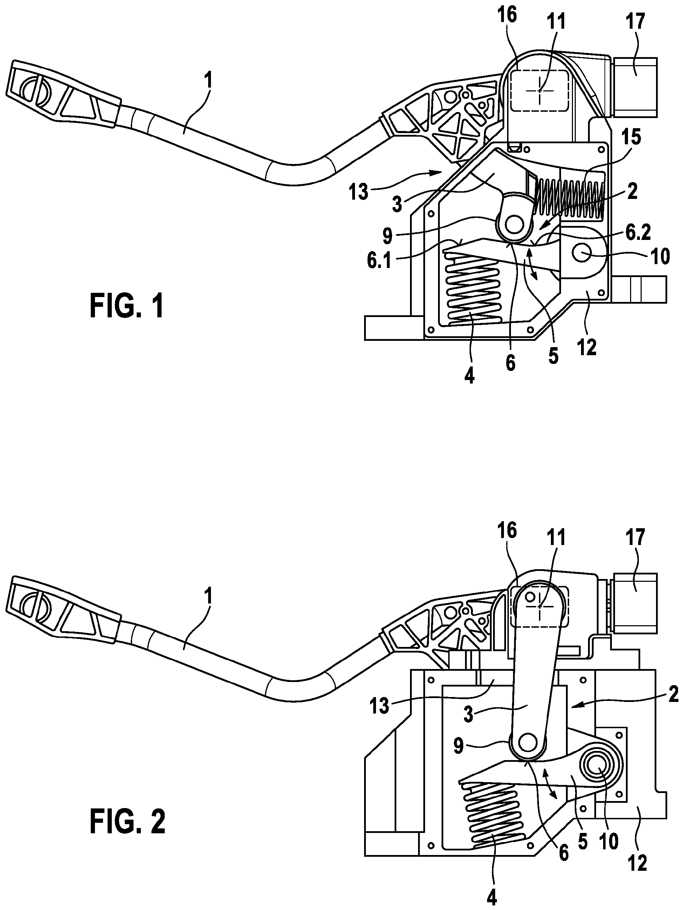

Fig.1 zeigt eine Schnittansicht der erfindungsgemäßen Kupplungspedaleinrichtung gemäß einem ersten Ausführungsbeispiel.

Die Kupplungspedaleinrichtung dient dazu, eine im Antriebstrang eines Fahrzeugs vorgesehene Kupplung elektronisch anzusteuern und dem Fahrer bei der Betätigung des Kupplungspedals ein ähnliches Pedalgefühl wie bei einem Kupplungspedal mit hydraulischer Kupplungsbetätigung zu vermitteln.

Die Kupplungspedaleinrichtung weist ein drehbar gelagertes Kupplungspedal 1 und Mittel 2 zur Erzeugung eines vorbestimmten Verlaufs der Pedalkraft über dem Pedalweg des Kupplungspedals 1 auf. Die Mittel 2 umfassen einen drehfest mit dem Kupplungspedal 1 verbundenen Pedalarm 3, der entgegen einer Federkraft bewegbar ist.

Erfindungsgemäß ist vorgesehen, dass der Pedalarm 3 auf einen von einer Gegenkraft beaufschlagten, drehbar gelagerten Hebelarm 5 wirkt und bei der Betätigung des Kupplungspedals 1 auf einer Kontur 6 des Hebelarms 5 translativ bewegt wird.

Die auf den Hebelarm 5 wirkende Gegenkraft kann von einer Hebelfeder 4 oder einem Aktuator erzeugt werden. Der Aktuator kann beispielsweise ein Elektromotor sein, der über ein Getriebe ein Drehmoment auf den Hebelarm 5 ausübt.

Gemäß dem Ausführungsbeispiel nach Fig.1 ist eine Hebelfeder 4 vorgesehen. Die Hebelfeder 4 drückt oder zieht den Hebelarm 5 dabei mit einer vorbestimmten Kraft gegen den Pedalarm 3 und setzt der Bewegung des Pedalarms bzw. des Kupplungspedals dadurch einen Widerstand entgegen, der abhängig von der Kontur des Hebelarms und der Kupplungsposition ist. Die Hebelfeder 4 ist gemäß dem Ausführungsbeispiel als Schraubenfeder ausgebildet, kann aber auch eine andere Feder, wie beispielsweise eine Tellerfeder sein.

Der Pedalarm 3 weist an seinem dem Hebelarm 5 zugewandten Ende, beispielsweise an seiner dem Hebelarm 5 zugewandten Unterseite, ein auf der Kontur 6 des Hebelarms 5 abrollendes Abrollelement 9 auf. Das Abrollelement 9 kann beispielsweise zylinderförmig, rollenförmig, kugelförmig oder kegelförmig ausgebildet sein. Alternativ kann an dem dem Hebelarm 5 zugewandten Ende des Pedalarms 3 auch ein auf der Kontur 6 des Hebelarms 5 gleitendes Gleitelement vorgesehen sein.

Der Hebelarm 5 ist um eine Hebelachse 10 drehbar gelagert, die gegenüber der Achse 11 des Kupplungspedals 1 derart beabstandet ist, dass zwischen dem Kupplungspedal 1 und dem Hebelarm 5 genügend Bauraum verbleibt für die Anordnung und Bewegung des Pedalarms 3. Die Hebelachse 10 und die Achse 11 verlaufen in die gleiche Richtung, sind also beispielsweise parallel zueinander angeordnet.

Der Pedalarm 3 gemäß dem ersten Ausführungsbeispiel kragt an einer Stelle vom Kupplungspedal 1 aus, die beabstandet ist zur Achse 11 des Kupplungspedals 1. Der Pedalarm 3 kragt dabei beispielsweise an einer dem Hebelarm 5 zugewandten Unterseite des Kupplungspedals 1 aus.

Bei einer Betätigung des Kupplungspedals 1 bewegt sich der Pedalarm 3 mit dem gleichen Winkel um die Achse 11 des Kupplungspedals 1 mit. Es könnte aber auch vorgesehen sein, dass sich die Drehbewegung des Kupplungspedals 1 und des Pedalarms 3 unterscheidet, beispielsweise durch eine kulissengeführte Hebelübersetzung bzw.-kopplung.

Bei Betätigung des Kupplungspedals 1 wird der Pedalarm 3,9 translativ über die Kontur 6 des Hebelarms 5 bewegt und drückt dabei den Hebelarm 5 abhängig vom Verlauf der Kontur 6 in unterschiedlichem Maße nach unten, wobei die Hebelfeder 4 entsprechend gedehnt wird und eine der Dehnung entsprechende, der Drehbewegung des Hebelarms 5 entgegenwirkende Federkraft erzeugt.

Gemäß dem ersten Ausführungsbeispiel ist der Hebelarm 5 in einem Gehäuse 12 angeordnet. Die Hebelfeder 4 stützt sich mit einem Ende an einer Wandung des Gehäuses 12 ab und liegt mit dem anderen Ende an dem Hebelarm 5 an. Der Pedalarm 3 des Kupplungspedals 1 ragt durch eine Öffnung 13 in das Gehäuse 12 hinein und wirkt mit seinem dem Hebelarm 5 zugewandten Ende auf den Hebelarm 5.

Es ist zumindest eine Rückstellfeder 15 vorgesehen, die rückstellend auf das Kupplungspedal 1 wirkt. Dadurch ist sichergestellt, dass das Kupplungspedal bei Nicht-Betätigung immer in seine Neutralposition zurückgelangt. Gemäß dem ersten Ausführungsbeispiel ist die Rückstellfeder 15 im Gehäuse 12 angeordnet und liegt mit ihrem einen Ende an einer Wandung des Gehäuses 12 und mit dem anderen Ende an dem Pedalarm 3 an. Die Rückstellfeder 15 ist gemäß dem Ausführungsbeispiel als Schraubenfeder ausgebildet, kann aber auch eine andere Feder, beispielsweise eine Tellerfeder sein.

In der Kupplungspedaleinrichtung können Reibmittel vorgesehen sein, die eine Hysterese im Verlauf der Pedalkraft über dem Pedalweg erzeugen. Diese Reibmittel können in einer Lagerung des Kupplungspedals 1 oder in der Lagerung des Pedalarms 3 am Hebelarm 5 integriert sind.

Außerdem weist die Kupplungspedaleinrichtung einen Positionssensor 16 auf, der die Position, insbesondere den Drehwinkel des Kupplungspedals 1 erfasst und beispielsweise ein Drehpotentiometer, ein Hall-Sensor oder ein induktiver Sensor ist. Darüber hinaus ist ein Steckeranschluss 17 vorgesehen, der zumindest einen Signalausgang für den Positionssensor 16 und Anschlüsse für eine Spannungsversorgung des Positionssensors 16 aufweist. Beispielsweise wird das Signal des Positionssensors als Eingangsgröße an eine Steuerung geleitet, die mit einem Ausgangssignal einen Aktuator ansteuert, der die im Antriebsstrang des Fahrzeugs vorgesehene Kupplung öffnet oder schließt. Die Steuerung kann dabei korrigierend eingreifen und beispielsweise ein sogenanntes Abwürgen des Motors durch ein zu schnelles Betätigen des Kupplungspedals verhindern.

Fig.2 zeigt die Kupplungspedaleinrichtung gemäß einem zweiten Ausführungsbeispiel.

Bei der Vorrichtung nach Fig.2 sind die gegenüber der Vorrichtung nach Fig.1 gleichbleibenden oder gleichwirkenden Teile durch die gleichen Bezugszeichen gekennzeichnet.

Die Vorrichtung nach Fig.2 unterscheidet sich gegenüber der Vorrichtung nach Fig.1 darin, dass der Pedalarm 3 nicht vom Kupplungspedal 1 auskragt, sondern mit seinem einen Ende auf der Achse 11 des Kupplungspedals 1 drehbar gelagert ist. Auf den Pedalarm 3 wirkende Kippmomente, deren Drehachse von der Achse 11 abweichen und beispielsweise senkrecht zur Achse 11 stehen, werden von der Drehlagerung des Pedalarms 3 aufgenommen und nicht auf das Kupplungspedal 1 übertragen. Somit ist die Einleitung der von der Hebelfeder 4 ausgeübten Gegenkraft in das Kupplungspedal 1 gemäß dem zweiten Ausführungsbeispiel mechanisch günstiger als im ersten Ausführungsbeispiel.

Der Pedalarm 3 ist wie im ersten Ausführungsbeispiel mit dem Kupplungspedal 1 drehfest verbunden, beispielsweise formschlüssig.

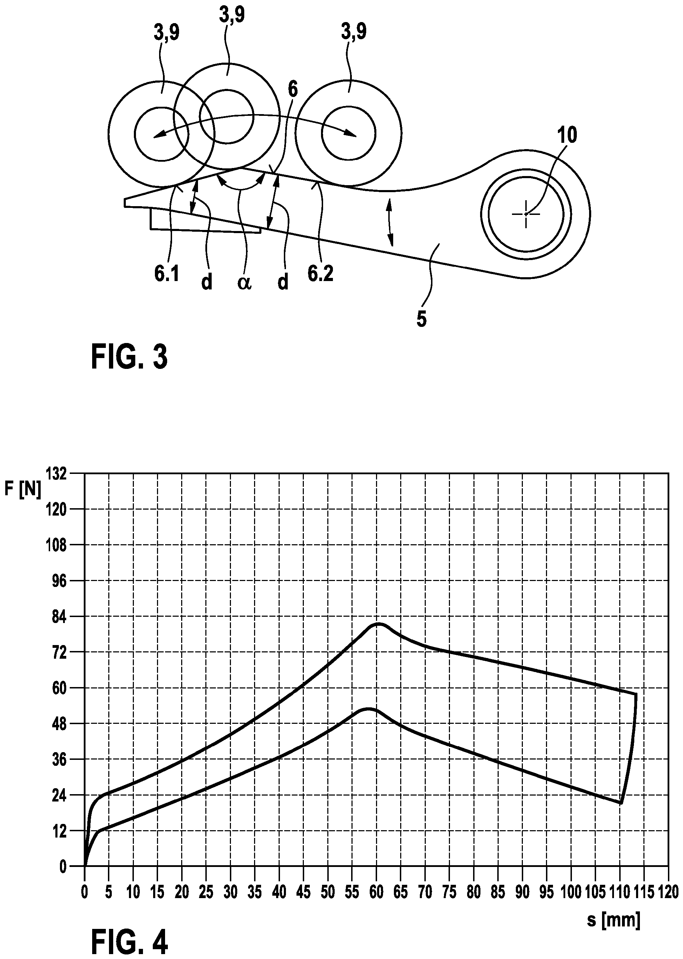

Fig.3 zeigt eine Ansicht des Hebelarms gemäß der Ausführung nach Fig.1 und Fig.2.

Die Kontur des Hebelarms 5 ist derart ausgebildet, dass die Pedalkraft in einem ersten Abschnitt 6.1 der Kontur 6 mit zunehmendem Pedalweg zunimmt und in einem nachfolgenden zweiten Abschnitt 6.2 der Kontur 6 mit weiter zunehmendem Pedalweg wieder abfällt, wobei der Verlauf der Pedalkraft über dem Pedalweg zwischen dem ersten und dem zweiten Abschnitt 6.1,6.2 ein Maximum aufweist (Fig.4). Die Länge, Steigung und Form der beiden Abschnitte 6.1,6.2 der Kontur 6 des Hebelarms 5 bestimmen jeweils maßgeblich die jeweilige Pedalkraft über dem Pedalweg.

Beispielsweise nimmt die Wandstärke d des Pedalarms 3 in dem ersten Abschnitt 6.1 bei Bewegung des Hebelarms 3 in Richtung der Hebelachse 10 zu.

Gemäß den Ausführungsbeispielen nach Fig.1 und Fig.2 ist zwischen der Kontur 6 des ersten Abschnitts 6.1 und der Kontur 6 des zweiten Abschnitts 6.2 des Hebelarms 5 ein Winkel α im Bereich zwischen 120 und 180 Grad eingeschlossen.

Die Kontur 6 des Hebelarms 5 kann zwischen dem ersten Abschnitt 6.1 und dem zweiten Abschnitt 6.2 scharfkantig bzw. spitz, abgerundet, flach oder plateauförmig ausgeführt sein.

## Patentansprüche

1. Kupplungspedaleinrichtung für eine Kupplung eines Kraftfahrzeugs mit einem drehbar gelagerten Kupplungspedal (1) und Mitteln (2) zur Erzeugung eines vorbestimmten Verlaufs der Pedalkraft über dem Pedalweg, die einen drehfest mit dem Kupplungspedal (1) verbundenen Pedalarm (3) umfassen, der entgegen einer Federkraft bewegbar ist, wobei der Pedalarm (3) auf einen von einer Gegenkraft beaufschlagten, drehbar gelagerten Hebelarm (5) wirkt und bei Betätigung des Kupplungspedals (1) auf einer Kontur (6) des Hebelarms (5) bewegt wird, wobei zumindest eine Rückstellfeder (15) vorgesehen ist, die rückstellend auf das Kupplungspedal wirkt,
wobei die Gegenkraft von einer auf den Hebelarm (5) wirkenden Hebelfeder (4) oder einem Aktuator erzeugt wird.

2. Kupplungspedaleinrichtung nach Anspruch 1,
wobei die Kupplungspedaleinrichtung dazu ausgelegt ist, die Kupplung elektronisch anzusteuern und dem Fahrer bei der Betätigung des Kupplungspedals ein ähnliches Pedalgefühl wie bei einem Kupplungspedal mit hydraulischer Kupplungsbetätigung zu vermitteln.

3. Kupplungspedaleinrichtung nach einem der vorhergehenden Ansprüche,
wobei der Hebelarm (5) in einem Gehäuse (12) angeordnet ist,
wobei die eine Rückstellfeder (15) in dem Gehäuse (12) angeordnet ist und mit ihrem einen Ende an einer Wandung des Gehäuses anliegt und mit dem anderen Ende an dem Pedalarm (3) anliegt.

4. Kupplungspedaleinrichtung nach einem der vorhergehenden Ansprüche, **dadurch gekennzeichnet, dass** die Hebelfeder (4) den Hebelarm (5) gegen den Pedalarm (3) bewegt.

5. Kupplungspedaleinrichtung nach einem der vorhergehenden Ansprüche, **dadurch gekennzeichnet, dass** der Pedalarm (3) an seinem dem Hebelarm (5) zugewandten Ende ein auf der Kontur (6) des Hebelarms (5) abrollendes Abrollelement (9) oder ein auf der Kontur (6) des Hebelarms (5) gleitendes Gleitelement aufweist.

6. Kupplungspedaleinrichtung nach einem der vorhergehenden Ansprüche, **dadurch gekennzeichnet, dass** das Abrollelement (9) zylinderförmig, rollenförmig, kugelförmig oder kegelförmig ausgebildet ist.

7. Kupplungspedaleinrichtung nach einem der vorhergehenden Ansprüche, **dadurch gekennzeichnet, dass** die Kontur (6) des Hebelarms (5) derart ausgebildet ist, dass die Pedalkraft in einem ersten Abschnitt (6.1) mit zunehmendem Pedalweg zunimmt und in einem nachfolgenden zweiten Abschnitt (6.2) mit weiter zunehmendem Pedalweg wieder abfällt, wobei der Verlauf der Pedalkraft über dem Pedalweg zwischen dem ersten und dem zweiten Abschnitt (6.1,6.2) ein Maximum aufweist.

8. Kupplungspedaleinrichtung nach einem der vorhergehenden Ansprüche, **dadurch gekennzeichnet, dass** zwischen der Kontur (6) des ersten Abschnitts (6.1) und der Kontur (6) des zweiten Abschnitts (6.2) des Hebelarms (5) ein Winkel (α) im Bereich zwischen 120 und 180 Grad eingeschlossen ist.

9. Kupplungspedaleinrichtung nach einem der vorhergehenden Ansprüche, **dadurch gekennzeichnet, dass** die Kontur (6) des Hebelarms (5) zwischen dem ersten Abschnitt (6.1) und dem zweiten Abschnitt (6.2) spitz, abgerundet, flach bzw. plateauförmig ausgeführt ist.

10. Kupplungspedaleinrichtung nach einem der vorhergehenden Ansprüche, **dadurch gekennzeichnet, dass** Reibmittel vorgesehen sind, die eine Hysterese im Verlauf der Pedalkraft über dem Pedalweg erzeugen.

11. Kupplungspedaleinrichtung nach einem der vorhergehenden Ansprüche, **dadurch gekennzeichnet, dass** ein Positionssensor (16) vorgesehen ist, der die Position, insbesondere den Drehwinkel des Kupplungspedals (1) erfasst.

## Claims

1. Clutch pedal arrangement for a clutch of a motor vehicle having a rotatably mounted clutch pedal (1) and means (2) for generating a predetermined profile of the pedal force plotted against the pedal travel, which means comprise a pedal arm (3) which is connected in a rotationally fixed fashion to the clutch pedal (1) and can move counter to a spring force, wherein the pedal arm (3) acts on a rotatably mounted lever arm (5) to which an opposing force is applied, and when the clutch pedal (1) is actuated said pedal arm (3) is moved on a contour (6) of the lever arm (5), wherein at least one restoring spring (15) is provided which acts in a restoring fashion on the clutch pedal, wherein the opposing force is generated by a lever spring (4), acting on the lever arm (5), or an actuator.

2. Clutch pedal arrangement according to Claim 1,
wherein the clutch pedal arrangement is configured to actuate the clutch electronically and to impart to the driver during the actuation of the clutch pedal a similar pedal sensation as in the case of a clutch pedal with hydraulic clutch actuation.

3. Clutch pedal arrangement according to one of the preceding claims, wherein the lever arm (5) is arranged in a housing (12), wherein the one restoring spring (15) is arranged in the housing (12) and bears with its one end on a wall of the housing and with the other end on the pedal arm (3).

4. Clutch pedal arrangement according to one of the preceding claims, **characterized in that** the lever spring (4) moves the lever arm (5) against the pedal arm (3).

5. Clutch pedal arrangement according to one of the preceding claims, **characterized in that** the lever arm (3) has, at its end facing the lever arm (5), a rolling element (9) which rolls on the contour (6) of the lever arm (5), or a sliding element which slides on the contour (6) of the lever arm (5).

6. Clutch pedal arrangement according to one of the preceding claims, **characterized in that** the rolling element (9) is embodied in the form of a cylinder, roller, sphere or cone.

7. Clutch pedal arrangement according to one of the preceding claims, **characterized in that** the contour (6) of the lever arm (5) is embodied in such a way that the pedal force increases with increasing pedal travel in a first section (6.1), and decreases again with further increasing pedal travel in a subsequent second section (6.2), wherein the profile of the pedal force is at a maximum over the pedal travel between the first and the second sections (6.1, 6.2).

8. Clutch pedal arrangement according to one of the preceding claims, **characterized in that** an angle (α) in the range between 120 degrees and 180 degrees is enclosed between the contour (6) of the first section (6.1) and the contour (6) of the second section (6.2) of the lever arm (5).

9. Clutch pedal arrangement according to one of the preceding claims, **characterized in that** the contour (6) of the lever arm (5) is embodied in a pointed, rounded or flat fashion or in the form of a plateau between the first section (6.1) and the second section (6.2).

10. Clutch pedal arrangement according to one of the preceding claims, **characterized in that** friction means are provided which generate a hysteresis in the profile of the pedal force over the pedal travel.

11. Clutch pedal arrangement according to one of the preceding claims, **characterized in that** a position sensor (16) is provided which detects the position, in particular the rotational angle of the clutch pedal (1).

## Revendications

1. Dispositif de pédale d'embrayage pour un embrayage d'un véhicule automobile comprenant une pédale d'embrayage (1) supportée à rotation et des moyens (2) pour générer une allure prédéterminée de la force de pédale par le biais de la course de pédale, lesquels comprennent un bras de pédale (3) connecté de manière solidaire en rotation à la pédale d'embrayage (1), qui peut être déplacé à l'encontre d'une force de ressort, dans lequel le bras de pédale (3) agit sur un bras de levier (5) supporté à rotation et sollicité par une force conjuguée, et, lors de l'actionnement de la pédale d'embrayage (1), est déplacé sur un contour (6) du bras de levier (5), dans lequel au moins un ressort de rappel (15) est prévu, lequel agit sur la pédale d'embrayage par effet de rappel,
dans lequel la force conjuguée est générée par un ressort de levier (4) agissant sur le bras de levier (5) ou un actionneur.

2. Dispositif de pédale d'embrayage selon la revendication 1,
dans lequel le dispositif de pédale d'embrayage est conçu pour commander l'embrayage de manière électronique et pour communiquer au conducteur, lors de l'actionnement de la pédale d'embrayage, une sensation de pédale similaire à celle obtenue avec une pédale d'embrayage à actionnement d'embrayage hydraulique.

3. Dispositif de pédale d'embrayage selon l'une quelconque des revendications précédentes, dans lequel le bras de levier (5) est disposé dans un boîtier (12), dans lequel ledit un ressort de rappel (15) est disposé dans le boîtier (12) et s'applique avec l'une de ses extrémités contre une paroi du boîtier et avec l'autre extrémité contre le bras de pédale (3).

4. Dispositif de pédale d'embrayage selon l'une quelconque des revendications précédentes, **caractérisé en ce que** le ressort de levier (4) déplace le bras de levier (5) contre le bras de pédale (3).

5. Dispositif de pédale d'embrayage selon l'une quelconque des revendications précédentes, **caractérisé en ce que** le bras de pédale (3) présente au niveau de son extrémité tournée vers le bras de levier (5) un élément de roulement (9) roulant sur le contour (6) du bras de levier (5) ou un élément de glissement glissant sur le contour (6) du bras de levier (5).

6. Dispositif de pédale d'embrayage selon l'une quelconque des revendications précédentes, **caractérisé en ce que** l'élément de roulement (9) est réalisé sous forme cylindrique, sous forme de rouleau, sous forme sphérique ou sous forme conique.

7. Dispositif de pédale d'embrayage selon l'une quelconque des revendications précédentes, **caractérisé en ce que** le contour (6) du bras de levier (5) est réalisé de telle sorte que la force de pédale augmente dans une première portion (6.1) avec l'augmentation de la course de pédale, et retombe à nouveau dans une deuxième portion suivante (6.2) avec l'augmentation de la course de pédale, dans lequel l'allure de la force de pédale sur la course de pédale présente un maximum entre la première et la deuxième portion (6.1, 6.2).

8. Dispositif de pédale d'embrayage selon l'une quelconque des revendications précédentes, **caractérisé en ce qu'**entre le contour (6) de la première portion (6.1) et le contour (6) de la deuxième portion (6.2) du bras de levier (5) est formé un angle (α) compris dans une plage entre 120 et 180 degrés.

9. Dispositif de pédale d'embrayage selon l'une quelconque des revendications précédentes, **caractérisé en ce que** le contour (6) du bras de levier (5) entre la première portion (6.1) et la deuxième portion (6.2) est réalisé sous forme pointue, arrondie, plate ou en forme de plateau.

10. Dispositif de pédale d'embrayage selon l'une quelconque des revendications précédentes, **caractérisé en ce que** des moyens de frottement sont prévus, lesquels génèrent une hystérésis dans l'allure de la force de pédale sur la course de pédale.

11. Dispositif de pédale d'embrayage selon l'une quelconque des revendications précédentes, **caractérisé en ce qu'**un capteur de position (16) est prévu, lequel détecte la position, en particulier l'angle de rotation de la pédale d'embrayage (1).
